# EUROPÄISCHE PATENTSCHRIFT

(11) **EP 3 449 142 B1**
(45) Veröffentlichungstag und Bekanntmachung des Hinweises auf die Patenterteilung: **25.12.2019**
(21) Anmeldenummer: 17716913.3
(22) Anmeldetag: 12.04.2017
(51) Int. Cl.: F16D 1/112, F16D 1/116, F16D 1/10, F16D 1/02, F04C 15/00

(54) **KUPPLUNG ZUM LÖSBAREN VERBINDEN VON ZWEI WELLEN**
COUPLING FOR DETACHABLY CONNECTING TWO SHAFTS
ACCOUPLEMENT PERMETTANT DE RELIER DEUX ARBRES DE MANIÈRE AMOVIBLE

(30) Priorität: 28.04.2016 DE 102016207246
(43) Veröffentlichungstag der Anmeldung: 06.03.2019
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2017/058814
(87) Internationale Veröffentlichungsnummer: WO 2017/186499

(56) Entgegenhaltungen:
- DE-C1- 3 501 262
- US-A- 4 172 369
- US-A- 4 392 759
- US-A- 5 788 473
- US-A1- 2010 260 537

## Beschreibung

Die vorliegende Erfindung betrifft eine mechanische Kupplung zum lösbaren Verbinden von zwei Wellen und zum formschlüssigen Übertragen von Energie zwischen diesen beiden Wellen. Insbesondere betrifft die Erfindung eine lösbare mechanische Kupplung zum Übertragen der Antriebsleistung eines Antriebsmotors an eine Dosierpumpe eines Hausgeräts, beispielsweise einer Waschmaschine.

Lösbare Kupplungen zum formschlüssigen Verbinden von zwei Wellen sind seit langer Zeit bekannt und in unzähligen Varianten Stand der Technik. In der Regel bestehen derartige lösbare Kupplungen aus zwei oftmals unterschiedlich ausgestalteten Kupplungshälften. Zur Gewährleistung eines totpunktfreien Fügens der zwei Kupplungshälften einer lösbaren Kupplung sind verschiedene Mechanismen bekannt. Ein typischer Vertreter einer solchen Kupplung, beispielsweise US-A-5 788 473, besteht aus zwei Kupplungshälften in Form von Kupplungsscheiben mit jeweils einer Kronverzahnung, beispielsweise einer HirthVerzahnung. Zum Erreichen der Totpunktfreiheit ist meist eine der beiden Kupplungshälften auf ihrer Welle über eine mindestens der Zahnhöhe entsprechenden Strecke axial beweglich, um im Falle des Aufeinandertreffens der Zahnspitzen beim Fügen zurückweichen zu können. Dieses Zurückweichen spannt eine Feder, die beim Beginn der Drehmomentübertragung die verzahnten Hälften ineinander gleiten lässt. Zwischen der beweglichen Kupplungshälfte und der zugehörigen Welle ist dann eine zweite Formschlussverbindung mit axialer Verschiebbarkeit notwendig, die beispielsweise als Keilwellenverbindung ausgeführt werden kann.

Bei Hausgeräten, insbesondere Waschmaschinen, sind einfach aufgebaute und kostengünstige Dosierpumpen für Fluide, insbesondere für flüssiges Waschmittel, von Interesse, um als Dosiersystem eingesetzt zu werden. Bekannt sind hierbei Dosiersysteme in unterschiedlichen Varianten, wie beispielsweise Volumenpumpen (Zahnradpumpen, Schlauchpumpen, oder Kolbenpumpen). Ebenfalls bekannt sind sogenannte Exzenterschneckenpumpen, welche für viele Einsatzzwecke gebräuchlich sind. Zum Einkoppeln der mechanischen Energie eines Antriebsmotors in eine Dosierpumpe kommen auch bei derartigen Hausgeräten häufig lösbare Kupplungen zum Einsatz. Da die Dosierpumpen dabei oftmals innerhalb eines entnehmbaren Vorratsbehälters als Teil des Dosiersystems ausgebildet sind, müssen hierfür geeignete lösbare Kupplungen insbesondere hinsichtlich des beschränkten Bauraums hohe Anforderungen erfüllen. Da bei einem Dosiersystem eines Hausgeräts die bei der Antriebseinheit inklusive Kupplung eingesparte Baulänge in eine größere Länge des Vorratsbehälters des Dosiersystem umgesetzt werden kann, gibt es bei Hausgeräten das Bestreben, insbesondere den axialen Bauraum einer lösbaren Kupplung auf ein Mindestmaß zu beschränken, was zu einer Erhöhung des Vorratsvolumens und damit zu einer Steigerung des Kundennutzens führt.

Der vorliegenden Erfindung liegt somit die Aufgabe zugrunde, eine - insbesondere in axialer Richtung - kompakt aufgebaute und kostengünstige Kupplung vorzuschlagen, die zum lösbaren formschlüssigen Verbinden von zwei Wellen geeignet ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe mittels einer Kupplung zum lösbaren Verbinden von zwei Wellen durch axiales Bewegen der Wellen zueinander gelöst, mit einer ersten Kupplungshälfte, die mit einer ersten Welle drehfest verbindbar ist, und einer zweiten Kupplungshälfte, die mit einer zweiten Welle drehfest verbindbar ist, wobei die zweite Kupplungshälfte einen Mitnehmer aufweist, wobei die erste Kupplungshälfte ein erstes Kraftübertragungselement und ein zweites Kraftübertragungselement aufweisen, die gemeinsam in einer Richtung senkrecht zur Achse der mit der ersten Kupplungshälfte verbindbaren ersten Welle, d.h. radial verschiebbar sind, und im gekuppelten Zustand der Kupplung eines der Kraftübertragungselemente mit dem Mitnehmer im Eingriff befindlich ist, um ein Drehmoment zwischen den beiden Wellen zu übertragen.

Dadurch wird eine - insbesondere in axialer Richtung - kompakt aufgebaute und kostengünstige Kupplung bereitgestellt, die zum lösbaren formschlüssigen Verbinden von zwei Wellen geeignet ist. Die Kupplung gemäß dem ersten Aspekt der Erfindung eignet sich insbesondere zum Einkoppeln von mechanischer Energie von einem in einem Hausgerät befindlichen Antriebsmotor zu einer in einem aus dem Hausgerät entnehmbaren Vorratsbehälter befindlichen Dosierpumpe eines Dosiersystems. Die Kupplung gemäß dem ersten Aspekt der Erfindung ist aber nicht auf die Verwendung in Hausgeräten, Waschmaschinen und/oder Dosiersystemen beschränkt.

Die hier verwendeten Begriffe erste Kupplungshälfte und zweite Kupplungshälfte sind nicht so zu verstehen, dass die erste Kupplungshälfte im Wesentlichen symmetrisch, d.h. baugleich zu der zweiten Kupplungshälfte ist. Wie dies nachstehend im Detail beschrieben wird, weisen die erste Kupplungshälfte und die zweite Kupplungshälften eine grundlegend andere, sozusagen asymmetrische Ausgestaltung auf, die im Zusammenwirken zu den Vorteilen der erfindungsgemäßen Kupplung führen.

Gemäß einer bevorzugten Ausführungsform ist der radiale Abstand zwischen den beiden Kraftübertragungselementen größer als der maximale radiale Durchmesser des Mitnehmers. Dadurch wird beispielsweise der technische Vorteil erreicht, dass die Kupplung einen Freiweg hat, d.h. sich nach dem Zusammenfügen der beiden Kupplungshälften oder bei einem Richtungswechsel des Antriebs zunächst ein Stück leer bewegt, bevor der Formschluss in der aktuellen Richtung greift. Dies kann z.B. vorteilhaft sein, wenn der Antriebsmotor ein begrenztes Drehmoment hat. Durch den Freiweg kann der Antriebsmotor Schwung holen und beim Einsetzen des Formschlusses zwischen den beiden Kupplungshälften einen gegenüber dem üblichen Betriebsdrehmoment stark erhöhten kurzzeitigen Drehmomentimpuls aufbringen. Besonders vorteilhaft ist dies z.B. bei Antriebsmotoren in Form von Einphasensynchronmotoren. Bei diesen Motoren ist das Anlaufmoment meist niedriger als das Betriebsdrehmoment und ein Anlauf wird oft durch Schwung überhaupt erst möglich.

Gemäß einer bevorzugten Ausführungsform weist der Mitnehmer eine Wirkfläche, insbesondere einen Fasenabschnitt, auf, die beim axialen Kuppeln der beiden Kupplungshälften so mit einem der beiden Kraftübertragungselemente zusammenwirken kann, dass die Kraftübertragungselemente durch Einwirkung der über die Wirkfläche, insbesondere den Fasenabschnitt, auf das eine Kraftübertragungselement ausgeübten Kraft radial verschoben werden können. Dadurch wird beispielsweise der technische Vorteil erreicht, dass die erfindungsgemäße Kupplung totpunktfrei ist, d.h. die Fügebewegung kann nicht durch den Formschlussmechanismus gestört werden.

Beispielsweise wäre bei der bekannten Lösung mit einer Kronverzahnung ohne spezielle Ausgleichsmaßnahmen die Gefahr der Blockierung der Fügebewegung gegeben, wenn die Kupplungshälften beim Fügen gerade so stehen, dass die Zahnspitzen aufeinandertreffen. Durch besonders scharfkantige Spitzen lässt sich diese Gefahr zwar reduzieren, aber nicht beseitigen. Gleichzeitig steigt damit aber auch der Verschleiß (Abstumpfen der scharfen Spitzen bzw. Kanten) und damit das Risiko des Aufeinandertreffens im Totpunkt.

Ferner wird beim erfindungsgemäßen Totpunktausgleichsmechanismus keine potentiell dauerhafte Federkraft in Fügerichtung ausgeübt. Im Fall eines Dosiersystems mit einer herkömmlichen Kronverzahnung mit axialer Verschiebbarkeit einer der Kupplungshälften könnte beim Aufeinandertreffen der Zahnspitzen die Federkraft der axial verschiebbaren Kupplungshälfte entgegen der Fügerichtung gegen einen Vorratsbehälter des Dosiersystems drücken. Somit hätte der Vorratsbehälter des Dosiersystems beispielsweise einer Waschmaschine die Tendenz, sich ein wenig nach außen zu bewegen. Eine Folge wäre, dass beim nächsten Starten des Antriebs ein Einrasten der Kupplung in die Arbeitsposition nicht mehr möglich ist. Im Speziellen könnte sich in einer Waschmaschine mit Vibrationen durch Schleudern der Vorratsbehälter unter Einfluss der Federkraft ein Stück nach außen rütteln. Ferner stehen potentiell dauerhaft unter Spannung stehende Federn einer Fertigung als kostengünstiges Kunststoffteil im Weg, da sich Kunststoffe im Allgemeinen unter Spannung im Lauf der Zeit setzen, was zu einer Erlahmung der Feder führen kann. Eine solche Einschränkung ist bei der erfindungsgemäßen Kupplung nicht gegeben.

Gemäß einer bevorzugten Ausführungsform weist die erste Kupplungshälfte einen Zentrierdorn auf und die zweite Kupplungshälfte eine Zentrierbohrung auf, die jeweils axial in Richtung der ersten bzw. der zweiten Welle ausgerichtet sind, um die beiden Kupplungshälften beim axialen Kuppeln miteinander zu zentrieren. Dadurch wird beispielsweise der technische Vorteil erreicht, dass beim Zusammenfügen der beiden Kupplungshälften diese relativ zueinander zentriert und ausgerichtet werden, so dass anfängliche Ungenauigkeiten bei der Ausrichtung selbsttätig korrigiert werden können.

Gemäß einer bevorzugten Ausführungsform weist die erste Kupplungshälfte einen Kupplungstopf auf, innerhalb dessen die beiden Kraftübertragungselemente verschiebbar angeordnet sind. Dadurch wird beispielsweise der technische Vorteil erreicht, dass die axiale Baulänge weiter reduziert werden kann, da die Führung der beiden Kraftübertragungselemente durch den Kupplungstopf der ersten Kupplungshälfte ausgebildet wird.

Gemäß einer bevorzugten Ausführungsform sind das erste Kraftübertragungselement und das zweite Kraftübertragungselement auf einem Riegel angeordnet, der an der ersten Kupplungshälfte senkrecht zur Achse der mit der ersten Kupplungshälfte verbindbaren ersten Welle, d.h. radial verschiebbar gelagert ist. Dadurch wird beispielsweise der technische Vorteil erreicht, dass sich auf einfache Art und Weise die Bewegung des ersten Kraftübertragungselements an die Bewegung des zweiten Kraftübertragungselements koppeln lässt.

Gemäß einer weiteren bevorzugten Ausführungsform weist der Kupplungstopf eine Hinterschneidung auf, um den Riegel an der ersten Kupplungshälfte verschiebbar zu lagern. Dadurch wird beispielsweise der technische Vorteil erreicht, dass die axiale Baulänge weiter reduziert werden kann.

Gemäß einer weiteren bevorzugten Ausführungsform weisen die Kraftübertragungselemente jeweils zwei Hinterschneidungen auf und der Mitnehmer zwei Vorsprünge auf, wobei zur Übertragung von Drehmoment im gekuppelten Zustand ein Vorsprung des Mitnehmers in eine Hinterschneidung eines Kraftübertragungselementes eingreift. Dadurch wird beispielsweise der technische Vorteil erreicht, dass die Drehmomentübertragung stabilisiert werden kann.

Gemäß einer weiteren bevorzugten Ausführungsform sind die Vorsprünge des Mitnehmers durch ein schwalbenschwanzförmiges Hinterschneiden des Mitnehmers ausgebildet. Dadurch wird beispielsweise der technische Vorteil erreicht, dass die Drehmomentübertragung stabilisiert werden kann.

Gemäß einer weiteren bevorzugten Ausführungsform umfassen die Kraftübertragungselemente und der Mitnehmer jeweils wenigstens zwei in Umfangsrichtung ausgerichtete gerade Stirnflächen, wobei zur Übertragung von Drehmoment im gekuppelten Zustand eine Stirnfläche des Mitnehmers an einer Stirnfläche eines Kraftübertragungselementes zum Anliegen kommt. Dadurch wird beispielsweise der technische Vorteil erreicht, dass die Drehmomentübertragung weiter stabilisiert werden kann.

Gemäß einer weiteren bevorzugten Ausführungsform sind die Kraftübertragungselemente und der Mitnehmer so ausgestaltet, dass nach dem Zusammenfügen der beiden Kupplungshälften und vor dem Erreichen des Eingriffs zwischen dem Mitnehmer und dem einen Kraftübertragungselement eine Drehung der zweiten Kupplungshälfte relativ zur ersten Kupplungshälfte über einen Freiweg möglich ist. Dadurch wird beispielsweise der technische Vorteil erreicht, dass der Antriebsmotor Schwung holen und beim Einsetzen des Formschlusses zwischen den beiden Kupplungshälften einen gegenüber dem üblichen Betriebsdrehmoment stark erhöhten kurzzeitigen Drehmomentimpuls aufbringen kann. Besonders vorteilhaft ist dies z.B. bei Antriebsmotoren in Form von Einphasensynchronmotoren. Bei diesen Motoren ist das Anlaufmoment meist niedriger als das Betriebsdrehmoment und ein Anlauf wird oft durch Schwung überhaupt erst möglich.

Gemäß einer weiteren bevorzugten Ausführungsform können die beiden Kraftübertragungselemente jeweils unterschiedliche Massenverteilungen aufweisen, so dass bei Rotation der ersten Kupplungshälfte die beiden Kraftübertragungselemente durch Einwirkung der auf die beiden Kraftübertragungselemente einwirkenden Fliehkräfte eine relativ zur ersten Kupplungshälfte festgelegte Position einnehmen. Dadurch wird beispielsweise der technische Vorteil erreicht, dass ein Durchrutschen des Riegels aufgrund der Schwerkraft bei niedrigen Drehzahlen verhindert werden kann.

Gemäß einem zweiten Aspekt der Erfindung wird ein Pumpensystem mit einem Antrieb, einer Pumpe und einer Kupplung gemäß dem vorstehend beschriebenen ersten Aspekt der Erfindung bereitgestellt, wobei der Antrieb drehfest mit der ersten Welle der ersten Kupplungshälfte verbunden ist und die Pumpe drehfest mit der zweiten Welle der zweiten Kupplungshälfte verbunden ist, um die Pumpe durch den Antrieb antreiben zu können. Gemäß einer bevorzugten Ausführungsform ist die Pumpe dabei als Dosierpumpe ausgebildet.

Gemäß einem dritten Aspekt der Erfindung wird ein Hausgerät, insbesondere eine Waschmaschine, mit einem Pumpensystem gemäß dem vorstehend beschriebenen zweiten Aspekt der Erfindung bereitgestellt, das eine Kupplung gemäß dem vorstehend beschriebenen ersten Aspekt der Erfindung umfasst.

Erfindungsgemäße Ausführungsformen der Kupplung erfüllen somit ferner die folgenden Anforderungen bzw. weisen die folgenden weiteren Vorteile auf.

Erfindungsgemäße Ausführungsformen der Kupplung sind lösbar, d.h. fügbar ausgestaltet. Im bevorzugten Anwendungsfall eines Hausgeräts, insbesondere einer Waschmaschine, bei der die erfindungsgemäße Kupplung als Teil eines Dosiersystems ausgebildet ist, welches sich aus der Waschmaschine entnehmen lässt, kann somit sichergestellt werden, dass ein Einschieben des Dosiersystems in die Waschmaschine die Kraftübertragung in der Kupplung ohne weitere Maßnahmen ermöglicht bzw. dass ein Herausziehen des Dosiersystems diese Kraftübertragung in der Kupplung ohne weitere Maßnahmen unterbricht.

Bei erfindungsgemäßen Ausführungsformen der Kupplung ist die Fügerichtung identisch mit der Richtung der Drehachse.

Bei erfindungsgemäßen Ausführungsformen der Kupplung wird das Drehmoment formschlüssig übertragen.

Bei erfindungsgemäßen Ausführungsformen der Kupplung wirkt die Kupplung vorzugsweise selbststabilisierend, d.h. vorzugsweise stabilisiert das wirkende Drehmoment den Formschluss.

Bei erfindungsgemäßen Ausführungsformen der Kupplung kann sichergestellt werden, dass sich die beiden Kupplungshälften im bevorzugten Anwendungsfall eines Hausgeräts, insbesondere einer Waschmaschine, bei der die erfindungsgemäße Kupplung als Teil eines Dosiersystems ausgebildet ist, welches sich aus der Waschmaschine entnehmen lässt, beim Einschieben des Dosiersystem in die Waschmaschine im Rahmen der zulässigen Toleranzen finden. Für den bevorzugten Anwendungsfall wäre ein typischer radialer Fangbereich ein Kreis mit etwa 2 mm Radius, so dass bei erfindungsgemäßen Ausführungsformen der Kupplung sichergestellt werden kann, dass die Achsen der beiden Kupplungshälften maximal 2 mm auseinander liegen.

Bei erfindungsgemäßen Ausführungsformen der Kupplung kann sichergestellt werden, dass ein Toleranzausgleich in axialer Richtung gegeben ist, d.h. dass die Kupplung das Drehmoment auch dann sicher übertragen kann, wenn die beiden Kupplungshälften nicht vollständig gefügt sind. Für den bevorzugten Anwendungsfall eines Hausgeräts, insbesondere einer Waschmaschine, bei der die erfindungsgemäße Kupplung als Teil eines Dosiersystems ausgebildet ist, welches sich aus der Waschmaschine entnehmen lässt, erlauben erfindungsgemäßen Ausführungsformen der Kupplung beispielsweise eine axiale Abweichung von bis zu ± 3 mm vom Sollwert.

Bei erfindungsgemäßen Ausführungsformen der Kupplung kann der Durchmesser der abtriebsseitigen Kupplungshälfte sehr klein gehalten werden, wenn die zweite Kupplungshälfte für den Abtrieb verwendet wird. Dies ist vorteilhaft, insbesondere beim bevorzugten Anwendungsfall eines Hausgeräts, beispielsweise einer Waschmaschine, bei dem die erfindungsgemäße Kupplung als Teil eines Dosiersystems ausgebildet ist.

Gemäß einem vierten Aspekt der Erfindung wird ein Verfahren zum Betreiben eines Hausgeräts, insbesondere einer Waschmaschine, bereitgestellt, das eine Kupplung gemäß dem vorstehend beschriebenen ersten Aspekt der Erfindung aufweist. Dabei umfasst das Verfahren den Schritt, dass bei einer abtriebsseitigen Blockade der Kupplung eine kurzzeitige Drehrichtungsumkehr der Antriebsseite der Kupplung durchgeführt wird.

Dadurch wird beispielsweise der technische Vorteil erreicht, dass eine beispielsweise durch Eintrocknen festsitzende Dosierpumpe des Hausgeräts mit mehreren automatischen Richtungswechseln des Antriebsmotors und der jeweils am Ende des Freiweges erfolgenden Drehmomentüberhöhung "freigeklopft" werden kann. Dieses Verfahren, die anzutreibende Einheit durch Schwungholen des Motors unter Ausnutzen eines Freiweges in der erfindungsgemäßen Kupplung frei zu klopfen, ist insbesondere, aber nicht ausschließlich im Zusammenhang mit Antriebsmotoren vorteilhaft, welche in der Regel die Eigenschaft haben, bei Überlast automatisch und ohne weitere Maßnahmen die Drehrichtung zu wechseln.

Es zeigen:
- Fig. 1: unterschiedliche Ansichten teilweise als Schnittdarstellung einer ersten Kupplungshälfte einer Kupplung gemäß einer Ausführungsform,
- Fig. 2: unterschiedliche Ansichten teilweise als Schnittdarstellung einer zweiten Kupplungshälfte einer Kupplung gemäß einer Ausführungsform,
- Fig. 3: unterschiedliche Ansichten teilweise als Schnittdarstellung der ersten und zweiten Kupplungshälfte einer Kupplung gemäß einer Ausführungsform zu unterschiedlichen Zeitpunkten beim Einfügen der zweiten Kupplungshälfte in die erste Kupplungshälfte,
- Fig. 4: Ansichten einer Kupplung gemäß einer Ausführungsform zu unterschiedlichen Zeitpunkten beim Herstellen einer formschlüssigen Verbindung zwischen der ersten Kupplungshälfte und der zweiten Kupplungshälfte,
- Fig. 5: eine schematische Darstellung des Kraftflusses bei der Drehmomentübertragung zwischen den beiden Kupplungshälften einer Kupplung gemäß einer Ausführungsform,
- Fig. 6: eine perspektivische Ansicht einer Kupplung mit einer ersten Kupplungshälfte und einer zweiten Kupplungshälfte gemäß einer Ausführungsform,
- Fig. 7: eine perspektivische Detailansicht der als Kupplungsscheibe ausgebildeten ersten Kupplungshälfte der Kupplung von Figur 6 mit einem Riegel,
- Fig. 8: eine perspektivische Detailansicht der als Kupplungsscheibe ausgebildeten ersten Kupplungshälfte der Kupplung von Figur 6,
- Fig. 9: eine perspektivische Detailansicht des Riegels von Figur 6 und Figur 7,
- Fig. 10: eine perspektivische Detailansicht der zweiten Kupplungshälfte der Kupplung von Figur 6,
- Fig. 11: Ansichten einer Kupplung gemäß einer Ausführungsform zu unterschiedlichen Zeitpunkten, die einen Effekt veranschaulichen, der bei einer Kupplung auftreten kann, die mit einer niedrigen Drehzahl der Antriebswelle beaufschlagt wird,
- Fig. 12: eine schematische Darstellung eines Riegels einer Kupplung gemäß einer Ausführungsform, die ausgebildet ist, den in Figur 11 veranschaulichten Effekt zu vermeiden,
- Fig. 13: eine perspektivische Ansicht der ersten Kupplungshälfte einer Kupplung gemäß einer Ausführungsform, die ausgebildet ist, den in Figur 11 veranschaulichten Effekt zu vermeiden, und
- Fig. 14: eine weitere perspektivische Ansicht teilweise als Schnittdarstellung der ersten Kupplungshälfte von Figur 13.

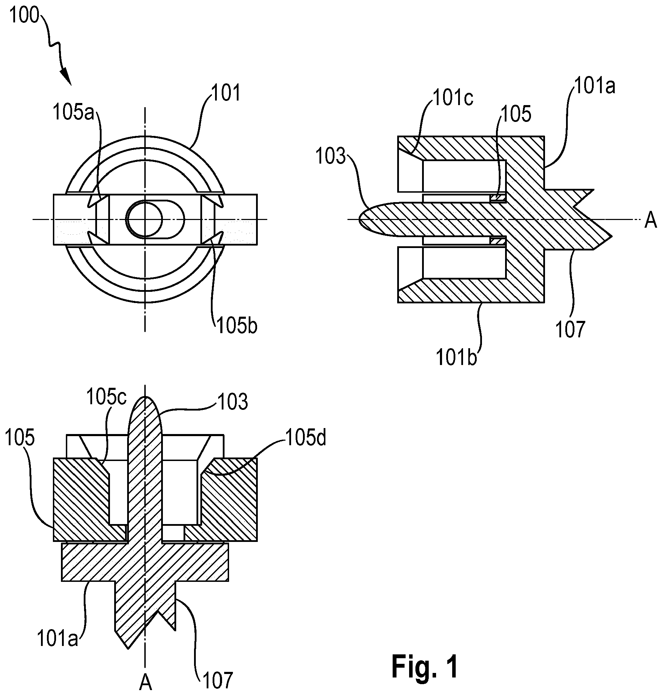

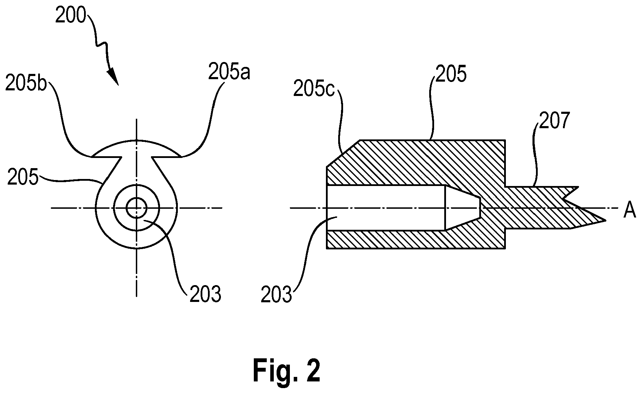

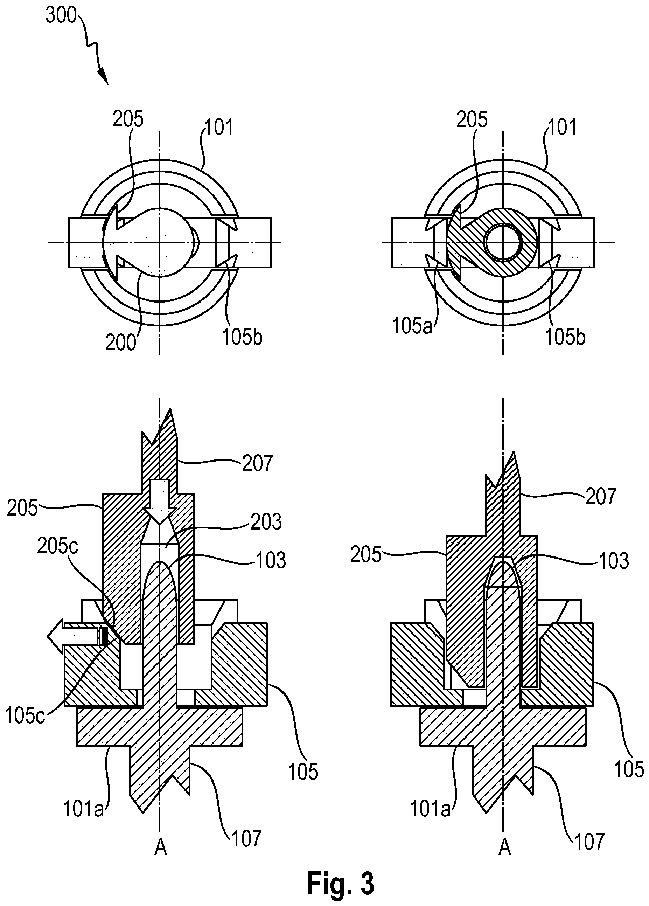

Figur 1 zeigt eine erste Kupplungshälfte 100 einer Kupplung 300 gemäß einer Ausführungsform zum lösbaren Verbinden von zwei Wellen. Die Kupplung 300, die beispielweise in Figur 3 dargestellt ist, umfasst ferner eine zweite Kupplungshälfte 200, die beispielsweise in Figur 2 dargestellt ist. Wie nachstehend im Detail beschrieben, sind Ausführungsformen der Kupplung 300 besonders gut für die Verwendung in einem Dosiersystem eines Hausgeräts, insbesondere einer Waschmaschine, geeignet. Ausführungsformen der Kupplung 300 können jedoch auch in anderen technischen Geräten zum Einsatz kommen, bei denen eine Energieübertagung zwischen zwei Wellen erforderlich ist.

Bei der in Figur 1 dargestellten Ausführungsform umfasst die erste Kupplungshälfte 100 einen im Wesentlichen topfförmigen Grundkörper 101, der hier auch als Kupplungstopf 101 bezeichnet wird. Der Kupplungstopf 101 besteht aus einem Kupplungsteller 101a und einem im Wesentlichen hohlzylinderförmigen Kupplungsmantel 101b und dient zur Aufnahme der zweiten Kupplungshälfte 200, wie nachstehend im Zusammenhang mit den Figuren 2 und 3 im Detail beschrieben wird. Zur selbsttätigen Zentrierung bei der Aufnahme der zweiten Kupplungshälfte 200 umfasst die erste Kupplungshälfte 100 ferner einen Zentrierdorn 103, der in der Mitte des Kupplungstellers 101a angeordnet ist und sich entlang der Längsachse A des Kupplungsmantels 101b erstreckt. Bei der in Figur 1 dargestellten Ausführungsform ist das offene Ende des Kupplungstopfs 101 als umlaufende Fase 101c ausgebildet, was zusätzlich zu der Selbstzentrierung durch den Zentrierdorn 103 dazu dient, das Einfügen der zweiten Kupplungshälfte 200 in die erste Kupplungshälfte 100 zu erleichtern.

Die erste Kupplungshälfte 100 ist ausgebildet, beispielsweise durch eine entsprechende Ausgestaltung der Unterseite des Kupplungstellers 101a, drehfest mit einer ersten Welle 107 verbunden zu werden, die beispielsweise wiederum mit einem Antriebsmotor verbunden ist. Bei der in Figur 1 dargestellten Ausführungsform fallen die Längsachsen der ersten Welle 107 und des Zentrierdorns 103 zusammen und definieren somit die Längsachse A der ersten Kupplungshälfte 100. Mit anderen Worten: der Zentrierdorn 103 der ersten Kupplungshälfte 100 ist axial in Richtung der ersten Welle 107 ausgerichtet.

Bei der in Figur 1 dargestellten Ausführungsform umfasst die erste Kupplungshälfte 100 ferner einen Riegel 105, der an der ersten Kupplungshälfte 100 senkrecht zu der Längsachse A der ersten Welle 107 und damit der ersten Kupplungshälfte 100 verschiebbar gelagert ist, und zwar zwischen einem ersten Endanschlag und einem zweiten Endanschlag. Aus Gründen der Übersichtlichkeit ist in den schematischen Ansichten der Figur 1 eine axiale Fixierung des Riegels weggelassen worden.

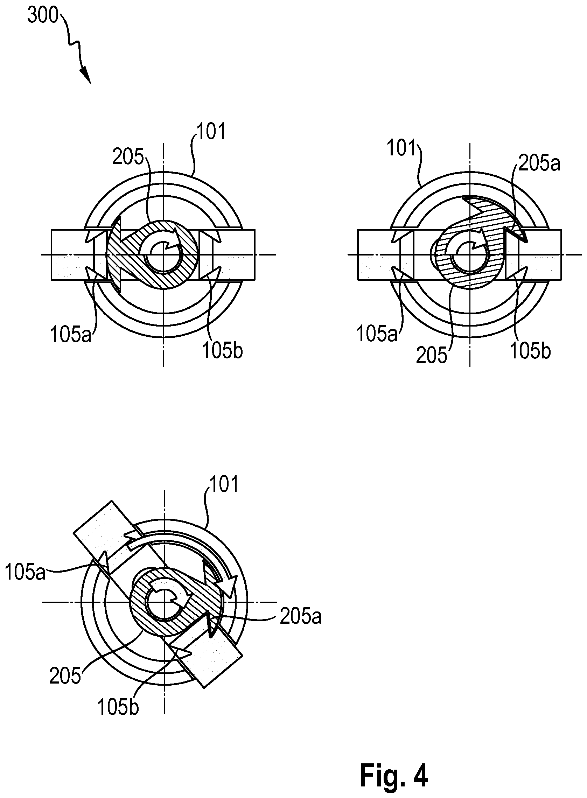

Auf dem Riegel 105 sind ein erstes Kraftübertragungselement 105a und ein zweites Kraftübertragungselement 105b angeordnet. Dabei sind die beiden Kraftübertragungselemente 105a, 105b derart auf dem Riegel 105 angeordnet, dass in beiden Endanschlägen der Bewegung des Riegels 105 entweder das eine oder das andere Kraftübertragungselement 105a, 105b in das Innere des Kupplungstopfes 101 ragt. Bei der in Figur 1 dargestellten Ausführungsform sind das erste Kraftübertragungselement 105a und das zweite Kraftübertragungselement 105b jeweils durch einen schwalbenschwanzförmigen Hinterschnitt an geeigneten Stellen auf dem Riegel 105 ausgebildet. Weitere Details zur Ausgestaltung und Funktion der beiden Kraftübertragungselemente 105a, 105b werden nachstehend insbesondere im Zusammenhang mit den Figuren 3 und 4 beschrieben.

Figur 2 zeigt die zweite Kupplungshälfte 200, die ausgebildet ist, zusammen mit der vorstehend beschriebenen ersten Kupplungshälfte 100 die in Figur 3 dargestellte Kupplung 300 gemäß einer Ausführungsform bereitzustellen. Die zweite Kupplungshälfte 200 ist mit einer zweiten Welle 207 drehfest verbindbar, bei der es sich um eine abtriebsseitige Welle handeln kann, die beispielsweise mit einer Dosierpumpe eines Dosiersystems eines Hausgeräts, insbesondere einer Waschmaschine, verbunden sein kann. Gemäß Ausführungsformen der Erfindung kann die zweite Kupplungshälfte 200 einstückig mit der zweiten Welle 207 ausgebildet sein. Mit anderen Worten: die zweite Kupplungshälfte 200 kann ein Ende der zweiten Welle 207 ausbilden.

Die zweite Kupplungshälfte 200 umfasst einen Mitnehmer 205, der ausgebildet ist, im gekuppelten Zustand der Kupplung 300 eines der beiden Kraftübertragungselemente 105a, 105b der ersten Kupplung 100 in Eingriff zu nehmen, um ein Drehmoment von der ersten Welle 107 auf die zweite Welle 207 oder umgekehrt zu übertragen, wie nachstehend detailliert beschrieben wird. Bei der in Figur 2 dargestellten Ausführungsform ist der Mitnehmer 205 an einem Ende der zweiten Welle 207 radial (d.h. exzentrisch) nach außen gerichtet ausgebildet. Dabei kann der Mitnehmer 205 zur Stabilisierung der Drehmomentübertragung ebenfalls mit einem schwalbenschwanzförmigen Hinterschnitt versehen sein, der zwei Vorsprünge 205a, 205b des Mitnehmers 205 definiert. Zur Übertragung von Drehmoment im gekuppelten Zustand der Kupplung 300 kann einer der beiden Vorsprünge 205a, 205b des Mitnehmers 205 in eine der entsprechend dimensionierten Hinterschneidungen des ersten oder zweiten Kraftübertragungselements 105a, 105b der ersten Kupplungshälfte 100 eingreifen, wie nachstehend im Zusammenhang mit Figur 4 detailliert beschrieben wird.

Bei der in Figur 2 dargestellten Ausführungsform umfasst die zweite Kupplungshälfte 200 ferner eine axiale Zentrierbohrung 203, die zusammen mit der zweiten Welle 207 die Längsachse A der zweiten Kupplungshälfte 200 definiert. Die axiale Zentrierbohrung 203 ist derart dimensioniert, beim Ineinanderfügen der beiden Kupplungshälften 100, 200 den Zentrierdorn 103 der ersten Kupplungshälfte 100 schmiegsam aufzunehmen und somit die zweite Kupplungshälfte auf dem Zentrierdorn 103 der ersten Kupplungshälfte 100 zu zentrieren.
Bei der in Figur 2 dargestellten Ausführungsform weist der Mitnehmer 205 an dem der ersten Kupplungshälfte 100 zugewandten Ende der zweiten Kupplungshälfte 200 eine Wirkfläche in Form eines Fasenabschnitts 205c auf. Mittels der Wirkfläche in Form des Fasenabschnitts 205c des Mitnehmers 205 kann sichergestellt werden, dass die beiden Kupplungshälften 100, 200 sich in beliebiger winkliger Orientierung zueinander fügen lassen, ohne dass zufällig aufeinandertreffende Elemente der Kupplungshälften 100, 200 ein Fügehindernis bilden, und zwar indem der Riegel 105 der ersten Kupplungshälfte 100 beim Ineinanderfügen durch den Mitnehmer 205, insbesondere den Fasenabschnitt 205c gegebenenfalls verschoben wird, wie nachstehend im Zusammenhang mit den Figuren 3 und 4 beschrieben wird.

Figur 3 zeigt die Kupplung 300 gemäß einer Ausführungsform zu zwei unterschiedlichen Zeitpunkten beim Einfügen der zweiten Kupplungshälfte 200 in die erste Kupplungshälfte 100. Dabei zeigen die zwei Ansichten auf der linken Seite von Figur 3 die erste und die zweite Kupplungshälfte 100, 200 zu einem Zeitpunkt während des Einfügens, während die zwei Ansichten auf der rechten Seite von Figur 3 die erste und die zweite Kupplungshälfte 100, 200 zum Schluss des Einfügevorgangs zeigen.

In den zwei Ansichten auf der linken Seite von Figur 3 ist dargestellt, wie der Mitnehmer 205 der zweiten Kupplungshälfte 200 aufgrund einer entsprechenden winkligen Ausrichtung der zweiten Kupplungshälfte 200 relativ zu der ersten Kupplungshälfte 100 zufällig auf einen in das Innere des Kupplungstopfs 101 hineinragenden Abschnitt des Riegels 105 trifft. Durch den Fasenabschnitt 205c am Mitnehmer 200 und den Fasenabschnitt 105c an dem in das Innere des Kupplungstopfs 101 hineinragenden Abschnitt des Riegels 105 wird aufgrund der axialen Fügebewegung (in Figur 3 durch einen Pfeil entlang der Achse A angedeutet) der in den Kupplungstopf 101 hineinragende Abschnitt des Riegels 105 in radialer Richtung aus dem Kupplungstopf 101 herausgeschoben (durch einen horizontalen Pfeil in Figur 3 angedeutet), wodurch gleichzeitig der gegenüberliegende Abschnitt des Riegels 105 in radialer Richtung in den Kupplungstopf 101 hineingezogen wird.

In den zwei Ansichten auf der rechten Seite von Figur 3 ist die Endposition der Einfügungsbewegung der zweiten Kupplungshälfte 200 in die erste Kupplungshälfte 100 dargestellt, in der beispielsweise der Zentrierdorn 103 der ersten Kupplungshälfte 100 vollständig in der Zentrierbohrung 203 der zweiten Kupplungshälfte 200 aufgenommen ist. Anhand der Draufsicht auf der rechten Seite von Figur 3 erkennt man, dass in dieser Endposition die zweite Kupplungshälfte 200 relativ zu der ersten Kupplungshälfte 100 um die Längsachse A über einen Freiwinkel von mehr als 90° frei verdreht werden kann. Dies ist auch in der Ansicht von Figur 4 links oben veranschaulicht, die im Wesentlichen der Ansicht von Figur 3 rechts oben entspricht und zusammen mit den anderen Ansichten von Figur 4 den Ablauf bei der Herstellung einer formschlüssigen Verbindung zwischen der ersten Kupplungshälfte 100 und der zweiten Kupplungshälfte 200 der Kupplung 300 veranschaulicht.

Falls aufgrund der winkligen Ausrichtung der zweiten Kupplungshälfte 200 relativ zu der ersten Kupplungshälfte 100 der Mitnehmer 205 beim Einfügen nicht auf einen Teil des Riegels 105 der ersten Kupplungshälfte 100 trifft, wird der Riegel 105 beim Einfügen der zweiten Kupplungshälfte 200 nicht verschoben. Bei der in Figur 4 oben links gezeigten Ansicht wäre das beispielsweise der Fall, wenn der Mitnehmer 205 der zweiten Kupplungshälfte 200 beim Einfügen senkrecht zu der Achse des Riegels 105 ausgerichtet wäre, d.h. vertikal nach oben oder nach unten ausgerichtet wäre. Durch Variationen der Anordnung, Lage, Größe und Gestaltung der jeweiligen Fasenabschnitte 105c, 105d und 205c kann sichergestellt werden, dass auch bei einem nur partiellem Aufeinandertreffen des Mitnehmers 205 und des Riegels 105 ein Ausweichen des Riegels 105 stattfindet, so dass es insgesamt keinen Totpunkt gibt und die Kupplung 300 in jeder beliebigen winkligen Orientierung der Kupplungsteile 100, 200 zueinander fügbar ist.

In der Ansicht von Figur 4 oben links ist eine beispielhafte Anordnung der ersten Kupplungshälfte 100 relativ zu der darin eingefügten zweiten Kupplungshälfte 200 beim Starten eines Antriebs dargestellt, und zwar beispielhaft eines mit der zweiten Welle 207 verbundenen Antriebs im Uhrzeigersinn. Nach dem Start des Antriebs verdrehen sich die beiden Kupplungshälften 100, 200 um die zentrierende Verbindung aus Zentrierdorn 103 und Zentrierbohrung 203 gegeneinander so weit, bis der schwalbenschwanzförmige Mitnehmer 205 der zweiten Kupplung 200 das ebenfalls schwalbenschwanzförmige zweite Kraftübertragungselement 105b des Riegels 105 der ersten Kupplungshälfte 100 in Eingriff nimmt, wie in Figur 4 oben rechts dargestellt. Mit anderen Worten: der Mitnehmer 205 der zweiten Kupplung 200 läuft über einen Freiwinkel, der bei dem in Figur 4 dargestellten Beispiel ungefähr 120° beträgt, bis zum gegenüberliegenden Kraftübertragungselement 105b und verhakt dort im Hinterschnitt des Kraftübertragungselements 105b. Dabei stabilisiert der Hinterschnitt die Position des Riegels 105 unter der Wirkung des von der zweiten Kupplungshälfte 200 ausgeübten Drehmoments.

In der Ansicht von Figur 4 unten links ist dargestellt, wie sich nach dem Verhaken des Mitnehmers 205 im Hinterschnitt des Kraftübertragungselements 105b die erste Kupplungshälfte 100 und die zweite Kupplungshälfte 200 gemeinsam im Uhrzeigersinn weiterdrehen, wobei das Drehmoment formschlüssig von der antriebsseitigen Kupplungshälfte (in diesem Beispiel der zweiten Kupplungshälfte 200) zur abtriebsseitigen Kupplungshälfte (in diesem Beispiel die erste Kupplungshälfte 100) übertragen wird.

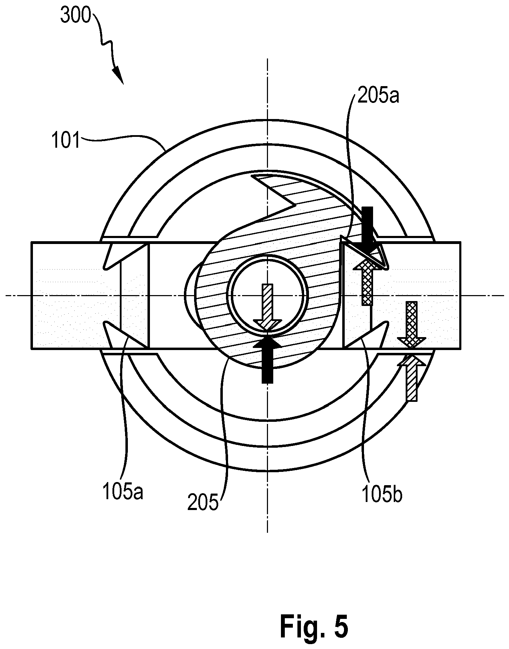

Figur 5 veranschaulicht schematisch den Kraftfluss bei der bereits in Figur 4 oben rechts dargestellten Drehmomentübertragung zwischen der zweiten Kupplungshälfte 200 und der ersten Kupplungshälfte 100. Wie sich Figur 5 entnehmen lässt, gibt es neben einem Kraftfluss zwischen dem Mitnehmer 205 und dem Kraftübertragungselement 105b unter anderem auch einen Kraftfluss zwischen dem Riegel 105 und dem Kupplungstopf 101, durch den das von der zweiten Welle 207 ausgeübte Drehmoment auf die mit dem Kupplungstopf 101 drehfest verbundene erste Welle 107 übertragen wird.

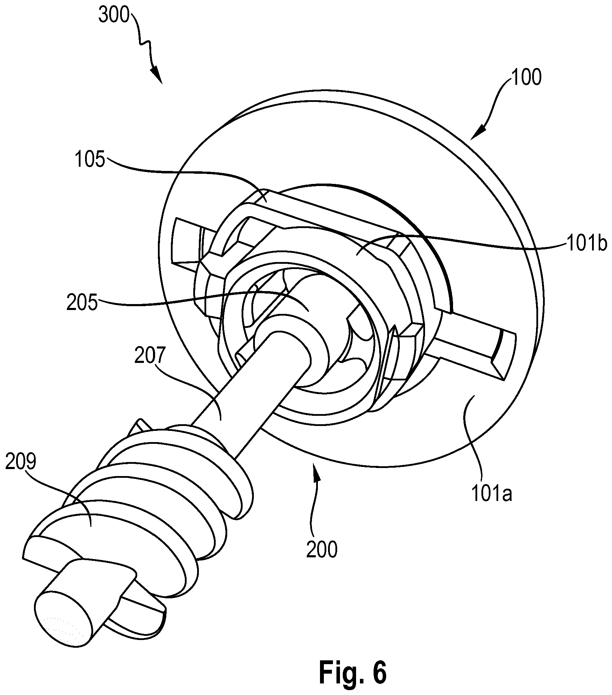

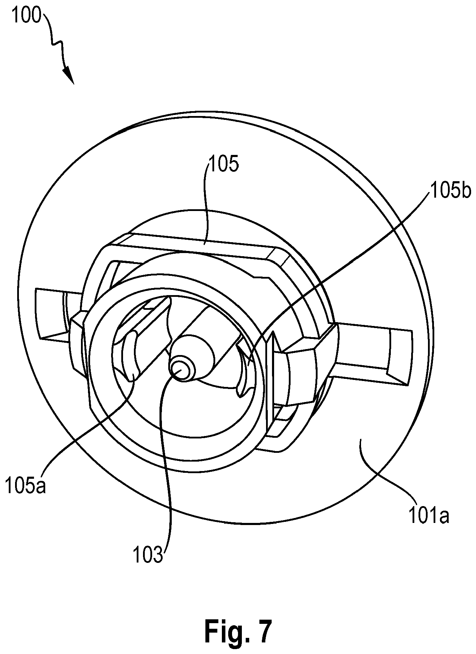

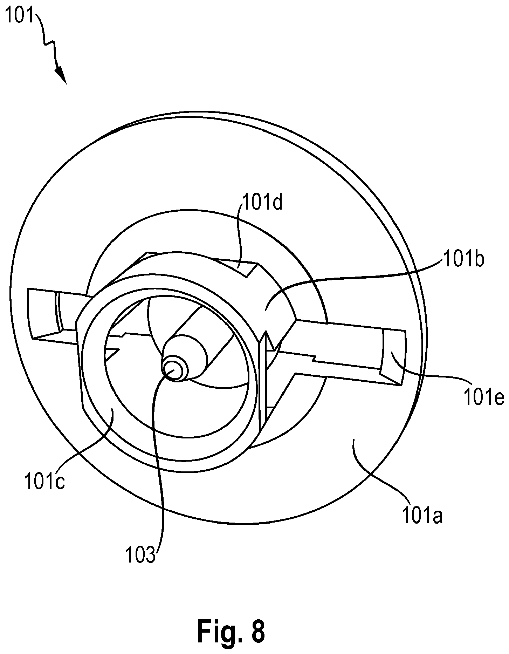

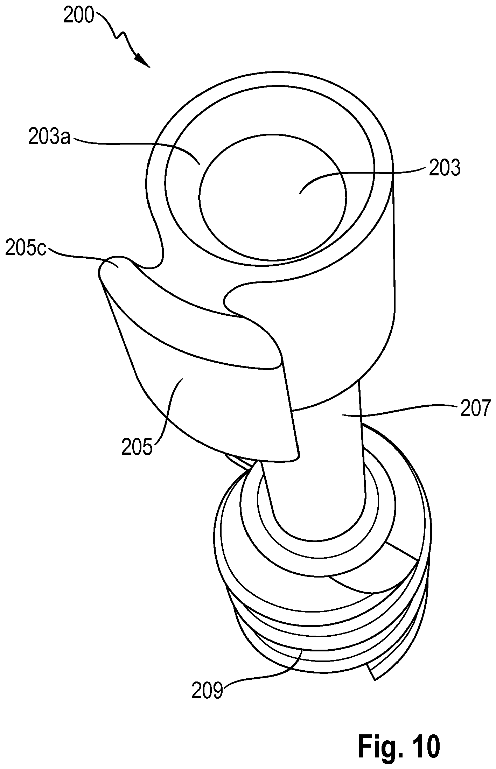

Die Figur 6 bis 10 zeigen perspektivische Ansichten einer weiteren Ausführungsform der Kupplung 300 mit einer ersten Kupplungshälfte 100 und einer zweiten Kupplungshälfte 200 sowie deren Komponenten. Bei der in den Figuren 6 bis 10 dargestellten Ausführungsform der Kupplung 300 ist der Kupplungsteller 101a der Ausführungsform von Figur 1 als Kupplungsscheibe 101a mit einer Führung 101d in Form einer Hinterschneidung zur Fixierung des Riegels 105 ausgebildet. Ferner dient bei der in den Figuren 6 bis 10 dargestellten Ausführungsform die zweite Welle 207 zum Antrieb eines Schneckengetriebes 209.

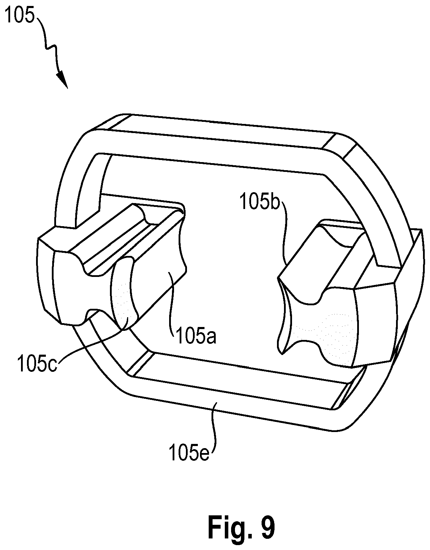

Wie sich insbesondere Figur 9 entnehmen lässt, umfasst bei dieser Ausführungsform der Kupplung 300 der Riegel 105 neben dem ersten und dem zweiten Kraftübertragungselement 105a, 105b einen ringförmigen Materialabschnitt, der die Kraftübertragungselemente 105a, 105b miteinander verbindet. Dadurch kann, wie in Figur 6 dargestellt, der Riegel 105 statt unter der Welle 207 durch, auch um die Welle 207 herum geführt werden, was zu einer weiteren Platzersparnis in axialer Richtung führt.

Bei erfindungsgemäßen Ausführungsformen der Kupplung 300 lassen sich die Antriebsseite und die Abtriebsseite beliebig festlegen. Beim bevorzugten Anwendungsfall eines Dosiersystems einer Waschmaschine kann dem Wunsch nach einem besonders kleinen Durchmesser der Kupplung 300 auf der Abtriebsseite dadurch entsprochen werden, dass die zweite Kupplungshälfte 200 mit dem Mitnehmer 205 und der Welle 207 als abtriebsseitige Kupplungshälfte verwendet wird und der Antrieb über die erste Kupplungshälfte 100 erfolgt.

Anstatt der vorstehend beschriebenen schwalbenschwanzförmigen Hinterschnitte der Kraftübertragungselemente 105a, 105a und/oder des Mitnehmers 205, welche die drehmomentübertragende Verbindung stabilisieren, können bei Ausführungsformen der Kupplung 300 die Kraftübertragungselemente 105a, 105a und/oder der Mitnehmer 205 auch radial verlaufende Flanken aufweisen. Dabei kann bei Ausführungsformen der Kupplung 300 der Flankenwinkel auch negativ angestellt werden. In diesem Fall hat die Kupplung 300 dann zusätzlich insofern eine gewisse Schutzfunktion (Überlastkupplung), als der Riegel 105 bei zu hohem Drehmoment aus dem Weg geschoben wird, wodurch die Drehmomentübertragung unterbrochen und ggf. wiederholt wird.

Bei erfindungsgemäßen Ausführungsformen der Kupplung 300 können Flächen des Zentrierdorns 103, der Zentrierbohrung 203 und/oder des Mitnehmers 205 ballig ausgebildet werden, wodurch Fluchtungsfehler ausgeglichen werden können.

Bei erfindungsgemäßen Ausführungsformen der Kupplung 300 können die Rollen des Zentrierdorns 103 der ersten Kupplungshälfte 100 und der Zentrierbohrung 203 der zweiten Kupplungshälfte vertauscht werden. Beispielsweise kann statt des Zentrierdorns 103 im Boden 101a des Kupplungstopfes 101 eine Bohrung zur Aufnahme eines Zentrierdorns ausgebildet sein, der am Ende der Welle 207 ausgebildet ist. Diese Ausführungsform erlaubt beispielsweise eine Reduzierung des Durchmessers der Welle 207.

Nachstehend werden einige Vorteile aufgeführt, die mittels Ausführungsformen der erfindungsgemäßen Kupplung 300 erreicht werden können.
Die erfindungsgemäße Kupplung 300 ist kann sehr einfach und kostengünstig hergestellt werden. Das Ausschalten des Totpunktes beim Fügen der ersten und der zweiten Kupplungshälfte 100, 200 kann lediglich mit nur einem zusätzlichen Bauteil bewerkstelligt werden. Bei der erfindungsgemäßen Kupplung ist eine Totpunktfreiheit gegeben, d.h. die erste und die zweite Kupplungshälfte 100, 200 lassen sich beliebig zueinander verdrehen. Aufgrund des erfindungsgemäßen Mechanismus zur Totpunktvermeidung sind nur geringe zusätzliche Fügekräfte, jedoch keine axialen Federkräfte nötig, was beispielsweise eine Feder erforderlich machen würde. Die erfindungsgemäße Kupplung 300 erlaubt starke axiale Toleranzen, d.h. praktisch sind beliebige Überdeckungslängen möglich. Die erfindungsgemäße Ausgestaltung des Riegels 105 als einem radial beweglichen Element erlaubt eine erhebliche Bautiefeneinsparung gegenüber üblichen Kupplungen mit axial beweglichen Elementen. Ein kurzer und direkter Weg für den Drehmomentfluss ermöglicht kompakte Bauform der erfindungsgemäßen Kupplung 300 bei hoher Drehmomentübertragbarkeit (im Gegensatz z.B. zu Kupplungen mit einem axial verschiebbarem Element, bei denen der Kraftfluss noch über die axiale Verschiebbarkeit z.B. durch eine Keilwellenverbindung übertragen werden muss). Durch das zu übertragende Drehmoment kann die Verbindung der beiden Kupplungshälften 100, 200 stabilisiert werden, insbesondere bei der Ausführungsform mit schwalbenschwanzförmigen Hinterschneidungen. Dies führt zu einer hohen Eigensicherheit der Verbindung der beiden Kupplungshälften 100, 200. Ausführungsformen der Kupplung 300 stellen einen Freiwinkel bereit, der eine Vorbeschleunigung ermöglicht. In der vorstehend beschriebenen Ausführungsform beträgt dieser Freiwinkel etwa 270° bei Richtungsumkehr, der je nach Anwendungsfall im Rahmen der vorliegenden Erfindung durch konstruktive Anpassungen nahezu beliebig variiert werden kann. Gegenüber herkömmlichen Kupplungen mit einer klassischen Kronverzahnung, beispielsweise Hirthverzahnung, und einer axial ausweichenden Kupplungshälfte treten bei der erfindungsgemäßen Kupplung 300 keine axialen Kräfte beim Fügen im Totpunkt und keine potentiell dauerhaften axialen Kräfte auf. Bei der klassischen Kronverzahnung rastet die Kupplung erst bei Drehmoment ein und übt bis dahin unter Umständen axiale Kräfte aus. Außerdem steht das die Axialkraft erzeugende Bauteil ständig unter Spannung, was die Verwendung von Kunststoffen als Material für derartige Kupplungen unmöglich macht. Ferner besteht bei der erfindungsgemäßen Kupplung 300 aufgrund der achsparallelen Übertragungsflanken keine Tendenz zu Schlupf. Schließlich können bei der erfindungsgemäßen Kupplung 300 der Riegel 105 und der Kupplungstopf 101 aus einem Stück geformt sein und sich gemeinsam in einer Führung auf dem Kupplungsteller (beispielsweise über eine Strecke von etwa 4 mm) bewegen. Dabei kann der Kupplungstopf 101 als ein (beispielsweise 4 mm langer) Quader mit aufgesetzten Halbzylindern ausgebildet sein, d.h. der Kupplungstopf 101 weist hierzu keinen zylindrischen Querschnitt auf.

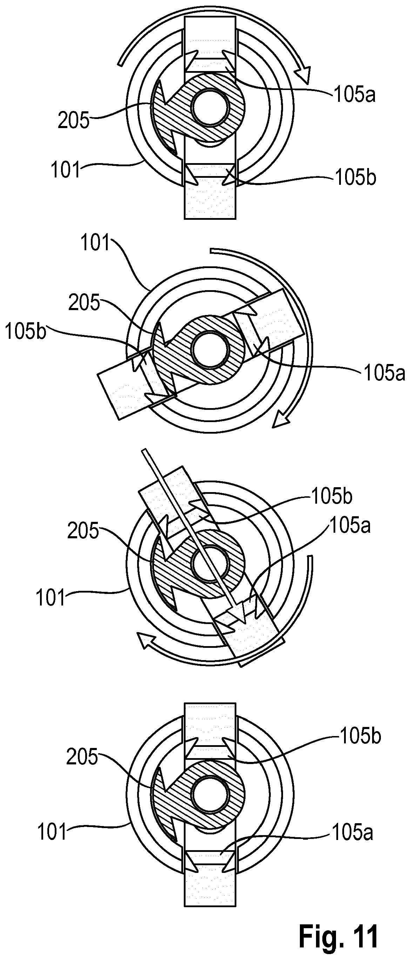

Gemäß einer vorteilhaften erfindungsgemäßen Variante kann insbesondere der Riegel 105 der ersten Kupplungshälfte 100 derart ausgebildet sein, dass eine der beiden Endpositionen des Riegels 105 durch die Fliehkraft stabilisiert wird. Dies ist beispielsweise bei Ausführungsformen der Kupplung 300 mit horizontal verlaufenden Achsen vorteilhaft, bei denen die erste Kupplungshälfte 100 mit dem Riegel 105 das treibende Element der Kupplung 300 bildet und die erste Kupplungshälfte 100 von der antriebsseitigen Welle 107 mit einer niedrigen Drehzahl angetrieben wird. Denn in einem solchen Fall kann ein Effekt auftreten, der darauf basiert, dass die Schwerkraft die Fliehkraft dominiert, und der nachstehend im Zusammenhang mit der Figur 11 beschrieben wird.

Figur 11 zeigt Ansichten einer Kupplung 300 gemäß einer Ausführungsform zu unterschiedlichen Zeitpunkten, die einen Effekt veranschaulichen, der auftreten kann, wenn Ausführungsformen der Kupplung 300, bei denen die erste Kupplungshälfte 100 das treibende Element bildet, mit sehr niedrigen Drehzahlen der Antriebswelle 107 beaufschlagt werden. Die vier Ansichten von Figur 11 zeigen vier unterschiedliche Positionen des Riegels 105 bei einer halben Drehung der ersten Kupplungshälfte 100 im Uhrzeigersinn.

In der obersten Ansicht von Figur 11 ist der Riegel 105 vertikal ausgerichtet, wobei sich beispielhaft das erste Kraftübertragungselement 105a oben und das zweite Kraftübertragungselement 105b unten befindet. Aufgrund der Schwerkraft und des Eigengewichtes des Riegels 105 befindet sich dabei das zweite Kraftübertragungselement 105b am Endanschlag der in der ersten Kupplungshälfte 100 ausgebildeten Führung zur radialen Verschiebung des Riegels 105.

Bei der Drehbewegung der ersten Kupplungshälfte 100 und damit des Kupplungstopfes 101 aus der in der obersten Ansicht von Figur 11 gezeigten Position im Uhrzeigersinn in die in der untersten Ansicht von Figur 11 gezeigte Position wird der beispielhaft nahezu horizontal ausgerichtete Mitnehmer 205 nicht von dem sich nach oben drehenden zweiten Kraftübertragungselement 105b in Eingriff genommen, da sich, wie vorstehend beschrieben, das zweite Kraftübertragungselement 105b am Endanschlag der in der ersten Kupplungshälfte 100 ausgebildeten Führung befindet (siehe die obere mittlere Ansicht von Figur 11).

Bei der weiteren Drehbewegung der ersten Kupplungshälfte 100 und damit des Kupplungstopfs 101 führt die auf den radial verschiebbar gelagerten Riegel 105 wirkende Schwerkraft dazu, dass der Riegel 105 nach unten rutscht, wodurch sich das zweite Kraftübertragungselement 105b von dem einen Endanschlag der Führung weg und das erste Kraftübertragungselement 105a zu dem anderen Endanschlag der Führung hin bewegt. Ein solches Verrutschen des Riegels 105 aufgrund der Schwerkraft kann hauptsächlich bei sehr niedrigen Drehzahlen erfolgen, da bei höheren Drehzahlen die auf den Riegel 105 wirkenden Fliehkräfte die Schwerkraft dominieren.

Ein mögliches Endergebnis dieser Rutschbewegung des Riegels 105b ist die in der untersten Ansicht von Figur 11 dargestellte Anordnung der Elemente der Kupplung 300, welche bis auf eine Vertauschung des ersten und des zweiten Kraftübertragungselements 105a, 105b der in der obersten Ansicht von Figur 11 dargestellten Anordnung entspricht. Wird die erste Kupplungshälfte 100 und damit der Kupplungstopf aus der in der untersten Ansicht von Figur 11 dargestellten Anordnung weiter im Uhrzeigersinn gedreht, kann es passieren, dass sich der in Figur 11 dargestellte Vorgang wiederholt, ohne dass der Mitnehmer 205 der zweiten Kupplungshälfte 200 von einem der Kraftübertragungselemente 105a, 105b der ersten Kupplungshälfte in Eingriff genommen wird, d.h. der Antriebsmotor dreht leer durch.

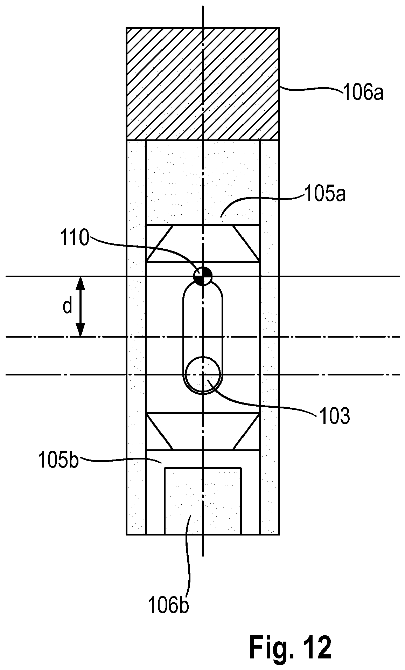

Figur 12 zeigt eine erfindungsgemäße Ausgestaltung des Riegels 105 als Teil der ersten Kupplungshälfte 100 und der Kupplung 300, mit dem der vorstehend beschriebene Durchrutscheffekt auch bei niedrigen Drehzahlen vermieden werden kann. Der Riegel 105 von Figur 12 definiert in beiden Endpositionen eine asymmetrische Gewichtsverteilung zu einem der beiden Kraftübertragungselemente 105a, 105b hin. Hierzu sind bei der in Figur 12 gezeigten Ausgestaltung ein Verdickungsabschnitt 106a am Ende des Riegels 105 ausgebildet, an dem das erste Kraftübertragungselement 105a ausgebildet ist, und ein Aussparungsabschnitt 106b am Ende des Riegels 105 ausgebildet, an dem das zweite Kraftübertragungselement 105b ausgebildet ist. Der Verdickungsabschnitt 106a kann auch als ein Teil des ersten Kraftübertragungselements 105a ausgebildet sein und der Aussparungsabschnitt 106b kann auch als Teil des zweiten Kraftübertragungselements 105b sein. Mit einer durch den Verdickungsabschnitt 106a und den Aussparungsabschnitt 106b definierten asymmetrischen Massenverteilung der beiden Kraftübertragungselemente 105a, 105b bzw. des Riegels 105 lässt sich erreichen, dass sich der durch die Massenverteilung definierte Schwerpunkt 110 des Riegels 105 relativ zu der Drehachse immer, d.h. insbesondere in beiden Endpositionen des Riegels 105, auf ein und derselben Seite des Riegels 105 befindet, an der eines der beiden Kraftübertragungselemente 105a, 105b ausgebildet ist. Bei dem in Figur 12 dargestellten Beispiel befindet sich der Schwerpunkt 110 des Riegels 107 aufgrund des Verdickungsabschnitts 106a des ersten Kraftübertragungselements 105a und des Aussparungsabschnitts 106b des zweiten Kraftübertragungselements 105b immer auf der Seite des ersten Kraftübertragungselements 105a. Dabei bezeichnet d den Abstand zwischen der Position des Schwerpunkts 110 mit der asymmetrischen Massenverteilung des Riegels 105 und der Position des Schwerpunkts im Fall eines Riegels 105 mit einer symmetrischen Massenverteilung.

Bei der in Figur 12 dargestellten erfindungsgemäßen Ausgestaltung des Riegels 105 ist eine der beiden Endpositionen des Riegels 105 auf jeden Fall stabil, da die durch die Ausgestaltung vorliegende Fliehkraft bei einer gegebenen Drehzahl die Endlage des Riegels 105 in dieser Position sichert, d.h. der Riegel 105 kann aus dieser Position nicht nach unten fallen. Die gegenüberliegende Endposition des Riegels 105 ist zwar nicht stabil, da der Riegel 105 bei sehr leichtgängiger Führung in dem Kupplungstopf 101 nach unten fallen könnte, wobei der Riegel 105 jedoch dann in die andere stabile Endposition fallen würde, so dass in diesem Fall die Kupplung 300 spätestens nach einer Umdrehung zuverlässig in Eingriff geht.

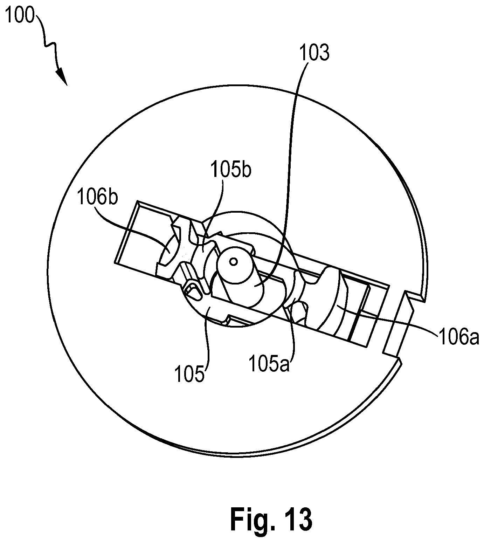

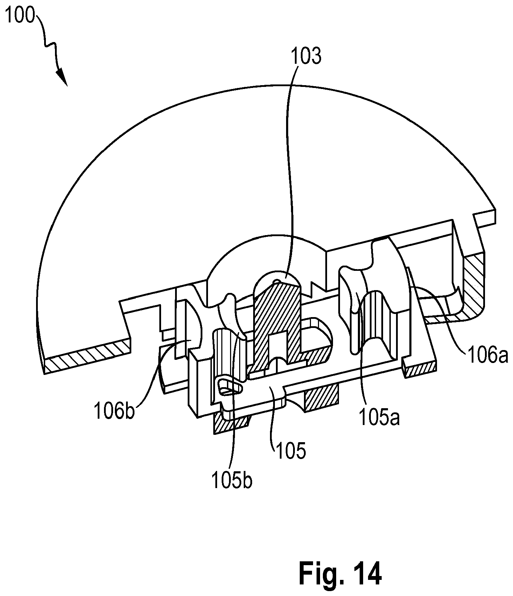

Die Figuren 13 und 14 zeigen eine erfindungsgemäße Ausgestaltung der ersten Kupplungshälfte 100 mit einem Riegel 105 mit einer asymmetrischen Massenverteilung. Die asymmetrische Massenverteilung des Riegels 105 wird durch den Aussparungsabschnitt 106b und Durchbrüche an einem Ende des Riegels 105, an dem das zweite Kraftübertragungselement 105b ausgebildet ist, und durch einen Verdickungsabschnitt bzw. eine Materialaufdickung 106a am anderen Ende des Riegels 105 erreicht, an dem das erste Kraftübertragungselement 105b ausgebildet ist. Bei der in den Figuren 13 und 14 gezeigten Ausgestaltung befindet sich der Schwerpunkt des Riegels 105 relativ zu der durch den Zentrierdorn 103 definierten Achse immer auf der Seite des Riegels 105, an welcher der Verdickungsabschnitt 106a ausgebildet ist. Alternativ oder zusätzlich können eines oder mehrere der folgenden Merkmale in einer erfindungsgemäßen Ausführungsform der Kupplung 300 verwirklicht sein, um dem Effekt des Abgleitens des Riegels 105 aufgrund der Schwerkraft entgegen zu wirken.

Bei erfindungsgemäßen Ausführungsformen der Kupplung 300 können an den Endpositionen bzw. Endanschlagen der Führung des Riegels 105 jeweilige Rastelemente vorgesehen sein, durch die der Riegel 105 in beiden Endpositionen einrastet. Neben mechanischen Rastsystemen eignen sich hierfür insbesondere auch magnetische Rastsysteme.

Bei erfindungsgemäßen Ausführungsformen der Kupplung 300 kann der Riegel 105 auch mittels Reibung fixiert werden. Beispielsweise kann eine Coulombreibung durch ein Federelement erzeugt werden, welches quer zur Führung auf den Riegel 105 drückt. Besonders bevorzugt ist die Erzeugung von viskoser Reibung durch Fettschmierung der Riegelführung. In diesem Fall sind die Schiebekräfte im Wesentlichen nur geschwindigkeitsabhängig.

Bei erfindungsgemäßen Ausführungsformen der Kupplung 300 kann auch der Freiwinkel verkleinert werden. Bei Freiwinkelwerten deutlich unter 180° tritt das vorstehend beschriebene Durchrutschen nicht mehr auf, so dass eine zusätzliche Fixierung des Riegels 105 nicht erforderlich ist.

Alle in Verbindung mit einzelnen Ausführungsformen der Erfindung erläuterten und gezeigten Merkmale können im Rahmen der Ansprüche in unterschiedlicher Kombination in dem erfindungsgemäßen Gegenstand vorgesehen sein, um gleichzeitig deren vorteilhafte Wirkungen zu realisieren.

### Bezugszeichenliste

- 100: erste Kupplungshälfte
- 101: Kupplungstopf
- 101a: Kupplungsteller
- 101b: Kupplungsmantel
- 101c: umlaufende Fase
- 103: Zentrierdorn
- 105: Riegel
- 105a: erstes Kraftübertragungselement
- 105b: zweites Kraftübertragungselement
- 105c: erster Fasenabschnitt
- 105d: zweiter Fasenabschnitt
- 106a: Verdickungsabschnitt
- 106b: Aussparungsabschnitt
- 107: erste Welle
- 109: Führung
- 110: Schwerpunkt
- 200: zweite Kupplungshälfte
- 203: Zentrierbohrung
- 205: Mitnehmer
- 205a: erster Vorsprung
- 205b: zweiter Vorsprung
- 205c: Fasenabschnitt
- 207: zweite Welle
- 209: Schneckengetriebe
- 300: Kupplung

- A: Längsachse
- d: Abstand

## Patentansprüche

1. Kupplung (300) zum lösbaren Verbinden von zwei Wellen (107, 207) durch axiales Bewegen der Wellen zueinander, mit:
einer ersten Kupplungshälfte (100), die mit einer ersten Welle (107) drehfest verbindbar ist, und
einer zweiten Kupplungshälfte (200), die mit einer zweiten Welle (207) drehfest verbindbar ist, wobei die zweite Kupplungshälfte (200) einen Mitnehmer (205) aufweist,
wobei die erste Kupplungshälfte (100) ein erstes Kraftübertragungselement (105a) und ein zweites Kraftübertragungselement (105b) aufweist, und im gekuppelten Zustand der Kupplung (300) eines der Kraftübertragungselemente (105a, 105b) mit dem Mitnehmer (205) im Eingriff befindlich ist, um ein Drehmoment zwischen den beiden Wellen (107, 207) zu übertragen,
**dadurch gekennzeichnet, dass**
die Kraftübertragungselemente (105a, 105b) gemeinsam in einer Richtung senkrecht zur Achse der mit der ersten Kupplungshälfte (100) verbindbaren Welle (107) verschiebbar sind.

2. Kupplung (300) nach Anspruch 1, **dadurch gekennzeichnet, dass** der radiale Abstand zwischen den beiden Kraftübertragungselementen (105a, 105b) größer ist als der radiale Durchmesser des Mitnehmers (205).

3. Kupplung (300) nach einem der vorangehenden Ansprüche, **dadurch gekennzeichnet, dass** der Mitnehmer (205) eine Wirkfläche (205c) aufweist, die beim axialen Kuppeln der beiden Kupplungshälften (100, 200) so mit einem der beiden Kraftübertragungselemente (105a, 105b) zusammenwirken kann, dass die Kraftübertragungselemente (105a, 105b) durch Einwirkung der über die Wirkfläche (205c) auf das eine Kraftübertragungselement ausgeübten Kraft verschoben werden können.

4. Kupplung (300) nach einem der vorangehenden Ansprüche, **dadurch gekennzeichnet, dass** die erste Kupplungshälfte (100) einen Zentrierdorn (103) und die zweite Kupplungshälfte (200) eine Zentrierbohrung (203) aufweist, die jeweils axial in Richtung der ersten bzw. der zweiten Welle (107, 207) ausgerichtet sind, um die beiden Kupplungshälften (100, 200) beim axialen Kuppeln miteinander zu zentrieren.

5. Kupplung (300) nach einem der vorangehenden Ansprüche, **dadurch gekennzeichnet, dass** die erste Kupplungshälfte (100) einen Kupplungstopf (101) aufweist, an dem die beiden Kraftübertragungselemente (105a, 105b) verschiebbar angeordnet sind.

6. Kupplung (300) nach einem der vorangehenden Ansprüche, **dadurch gekennzeichnet, dass** das erste Kraftübertragungselement (105a) und das zweite Kraftübertragungselement (105b) auf einem Riegel (105) angeordnet sind, der an der ersten Kupplungshälfte (100) senkrecht zur Achse der mit der ersten Kupplungshälfte (100) verbindbaren Welle (107) verschiebbar gelagert ist.

7. Kupplung (300) nach Anspruch 5 in Verbindung mit Anspruch 6, **dadurch gekennzeichnet, dass** der Kupplungstopf (101) eine Hinterschneidung aufweist, um den Riegel (105) an der ersten Kupplungshälfte (100) verschiebbar zu lagern.

8. Kupplung (300) nach einem der vorangehenden Ansprüche, **dadurch gekennzeichnet, dass** die Kraftübertragungselemente (105a, 105b) jeweils zwei Hinterschneidungen aufweisen und der Mitnehmer (205) zwei Vorsprünge (205a, 205b) aufweist, und wobei zur Übertragung von Drehmoment im gekuppelten Zustand ein Vorsprung (205a, 205b) des Mitnehmers (205) in eine Hinterschneidung eines der Kraftübertragungselemente (105a, 105b) eingreift.

9. Kupplung (300) nach Anspruch 8, **dadurch gekennzeichnet, dass** die Vorsprünge (205a, 205b) des Mitnehmers (205) durch schwalbenschwanzförmige Hinterschneidungen des Mitnehmers (205) ausgebildet sind.

10. Kupplung (300) nach einem der vorangehenden Ansprüche, **dadurch gekennzeichnet, dass** die Kraftübertragungselemente (105a, 105b) und der Mitnehmer (205) so ausgestaltet sind, dass nach dem Zusammenfügen der beiden Kupplungshälften (100, 200) und vor dem Erreichen des Eingriffs zwischen dem Mitnehmer (205) und dem einen Kraftübertragungselement (105a, 105b) eine Drehung der zweiten Kupplungshälfte (200) relativ zur ersten Kupplungshälfte (100) möglich ist.

11. Kupplung (300) nach einem der vorangehenden Ansprüche, **dadurch gekennzeichnet, dass** die beiden Kraftübertragungselemente (105a, 105b) jeweils unterschiedliche Massenverteilungen aufweisen, so dass bei Rotation der ersten Kupplungshälfte (100) die beiden Kraftübertragungselemente (105a, 105b) durch Einwirkung der auf die beiden Kraftübertragungselemente (105a, 105b) einwirkenden Fliehkräfte eine relativ zur ersten Kupplungshälfte (100) festgelegte Position einnehmen.

12. Pumpensystem mit einem Antrieb, einer Pumpe und einer Kupplung (300) gemäß einem der vorangehenden Ansprüche, wobei der Antrieb drehfest mit der ersten Welle (107) der ersten Kupplungshälfte (100) verbunden ist und die Pumpe drehfest mit der zweiten Welle (207) der zweiten Kupplungshälfte (200) verbunden ist, um die Pumpe durch den Antrieb anzutreiben.

13. Pumpensystem nach Anspruch 12, **dadurch gekennzeichnet, dass** die Pumpe als Dosierpumpe ausgebildet ist.

14. Hausgerät, insbesondere Waschmaschine, mit einem Pumpensystem gemäß Anspruch 12 oder 13 mit einer Kupplung (300) gemäß einem der Ansprüche 1 bis 11.

15. Verfahren zum Betrieb eines Hausgeräts, insbesondere einer Waschmaschine, das ein Pumpensystem gemäß Anspruch 12 oder 13 mit einer Kupplung (300) gemäß einem der Ansprüche 1 bis 11 aufweist, **dadurch gekennzeichnet, dass** bei einer abtriebsseitigen Blockade der Kupplung (300) eine kurzzeitige Drehrichtungsumkehr der Antriebsseite der Kupplung (300) durchgeführt wird.

## Claims

1. Coupling (300) for detachably connecting two shafts (107, 207) by axially moving the shafts in relation to one another, with:
a first coupling half (100), which is able to be connected to a first shaft (107) in a torque-proof manner, and
a second coupling half (200), which is able to be connected to a second shaft (207) in a torque-proof manner, wherein the second coupling half (200) has a driver (205),
wherein the first coupling half (100) has a first force transfer element (105a) and a second force transfer element (105b), and
in the coupled state of the coupling (300), one of the force transfer elements (105a, 105b) is in engagement with the driver (205), in order to transfer a torque between the two shafts (107, 207),
**characterised in that**
the force transfer elements (105a, 105b) are able to be displaced together in a direction perpendicular to the axis of the shaft (107) able to be connected to the first coupling half (100).

2. Coupling (300) according to claim 1, **characterised in that** the radial spacing between the two force transfer elements (105a, 105b) is greater than the radial diameter of the driver (205).

3. Coupling (300) according to one of the preceding claims, **characterised in that** the driver (205) has an active surface (205c) which, when the two coupling halves (100, 200) are coupled axially, is able to interact with one of the two force transfer elements (105a, 105b) so that the force transfer elements (105a, 105b) can be displaced by the effect of the force exerted on the one force transfer element via the active surface (205c).

4. Coupling (300) according to one of the preceding claims, **characterised in that** the first coupling half (100) has a centring pin (103) and the second coupling half (200) has a centring hole (203), which are in each case oriented axially in the direction of the first or the second shaft (107, 207), in order to centre the two coupling halves (100, 200) during the axial coupling to one another.

5. Coupling (300) according to one of the preceding claims, **characterised in that** the first coupling half (100) has a coupling pan (101), on which the two force transfer elements (105a, 105b) are arranged in a displaceable manner.

6. Coupling (300) according to one of the preceding claims, **characterised in that** the first force transfer element (105a) and the second force transfer element (105b) are arranged on a latch (105), which is mounted in a displaceable manner on the first coupling half (100) perpendicular to the axis of the shaft (107) which is able to be connected to the first coupling half (100).

7. Coupling (300) according to claim 5 in conjunction with claim 6, **characterised in that** the coupling pan (101) has an indentation, in order to mount the latch (105) to the first coupling half (100) in a displaceable manner.

8. Coupling (300) according to one of the preceding claims, **characterised in that** the force transfer elements (105a, 105b) each have two indentations and the driver (205) has two protrusions (205a, 205b), and wherein a protrusion (205a, 205b) of the driver (205) engages into an indentation of one of the force transfer elements (105a, 105b) in order to transfer torque in the coupled state.

9. Coupling (300) according to claim 8, **characterised in that** the protrusions (205a, 205b) of the driver (205) are embodied by dovetail-shaped indentations of the driver (205).

10. Coupling (300) according to one of the preceding claims, **characterised in that** the force transfer elements (105a, 105b) and the driver (205) are embodied such that after assembling the two coupling halves (100, 200) and before achieving the engagement between the driver (205) and the one force transfer element (105a, 105b) it is possible to rotate the second coupling half (200) in relation to the first coupling half (100).

11. Coupling (300) according to one of the preceding claims, **characterised in that** the two force transfer elements (105a, 105b) each have different mass distributions, so that when the first coupling half (100) is rotated, the two force transfer elements (105a, 105b) assume a fixed position in relation to the first coupling half (100) due to the effect of the centrifugal forces acting on the two force transfer elements (105a, 105b).

12. Pump system with a drive, a pump and a coupling (300) according to one of the preceding claims, wherein the drive is connected to the first shaft (107) of the first coupling half (100) in a torque-proof manner and the pump is connected to the second shaft (207) of the second coupling half (200) in a torque-proof manner, in order to drive the pump by way of the drive.

13. Pump system according to claim 12, **characterised in that** the pump is embodied as a dosing pump.

14. Household appliance, in particular washing machine, with a pump system according to claim 12 or 13 with a coupling (300) according to one of claims 1 to 11.

15. Method for operating a household appliance, in particular a washing machine, which has a pump system according to claim 12 or 13 with a coupling (300) according to one of claims 1 to 11, **characterised in that**, should the coupling (300) be blocked on the output side, a brief reversal of the direction of rotation is performed on the drive side of the coupling (300).

## Revendications

1. Accouplement (300) pour relier de manière amovible deux arbres (107, 207) par déplacement axial des arbres l'un par rapport à l'autre, avec :
une première moitié d'accouplement (100) qui peut être reliée de manière solidaire en rotation à un premier arbre (107), et
une deuxième moitié d'accouplement (200) qui peut être reliée de manière solidaire en rotation à un deuxième arbre (207), dans lequel la deuxième moitié d'accouplement (200) comprend un suiveur (205),
dans lequel
la première moitié d'accouplement (100) comprend un premier élément de transmission de force (105a) et un deuxième élément de transmission de force (105b), et,
dans l'état accouplé de l'accouplement (300) de l'un des éléments de transmission de force (105a, 105b), se trouve en prise avec le suiveur (205) afin de transmettre un couple de rotation entre les deux arbres (107, 207),
**caractérisé en ce que**
les éléments de transmission de force (105a, 105b) peuvent se déplacer conjointement dans une direction perpendiculaire à l'axe de l'arbre (107) pouvant être relié à la première moitié d'accouplement (100).

2. Accouplement (300) selon la revendication 1, **caractérisé en ce que** la distance radiale entre les deux éléments de transmission de force (105a, 105b) est supérieure au diamètre radial du suiveur (205).

3. Accouplement (300) selon l'une des revendications précédentes, **caractérisé en ce que** le suiveur (205) comprend une surface active (205c) qui, lors de l'accouplement axial des deux moitiés d'accouplement (100, 200), peut coopérer avec l'un des deux éléments de transmission de force (105a, 105b) de telle sorte que les éléments de transmission de force (105a, 105b) puissent être déplacés sous l'action de la force exercée par l'intermédiaire de la surface d'action (205c) sur l'un des éléments de transmission de force.

4. Accouplement (300) selon l'une des revendications précédentes, **caractérisé en ce que** la première moitié d'accouplement (100) comprend un mandrin de centrage (103) et la deuxième moitié d'accouplement (200) comprend un alésage de centrage (203), lesquels sont respectivement orientés axialement dans la direction respectivement du premier et du deuxième arbre (107, 207) afin de centrer les deux moitiés d'accouplement (100, 200) l'une avec l'autre lors de l'accouplement axial.

5. Accouplement (300) selon l'une des revendications précédentes, **caractérisé en ce que** la première moitié d'accouplement (100) comprend une cloche d'accouplement (101) au niveau de laquelle les deux éléments de transmission de force (105a, 105b) sont disposés de manière à pouvoir se déplacer.

6. Accouplement (300) selon l'une des revendications précédentes, **caractérisé en ce que** le premier élément de transmission de force (105a) et le deuxième élément de transmission de force (105b) sont disposés sur un pêne (105), lequel est monté de manière à pouvoir se déplacer au niveau de la première moitié d'accouplement (100) perpendiculairement à l'axe de l'arbre (107) pouvant être relié à la première moitié d'accouplement (100).

7. Accouplement (300) selon la revendication 5 en liaison avec la revendication 6, **caractérisé en ce que** la cloche d'accouplement (101) comprend une contre-dépouille afin de monter le pêne (105) de manière à ce qu'il puisse se déplacer au niveau de la première moitié d'accouplement (100).

8. Accouplement (300) selon l'une des revendications précédentes, **caractérisé en ce que** les éléments de transmission de force (105a, 105b) comprennent respectivement deux contre-dépouilles et le suiveur (205) comprend deux parties saillantes (205a, 205b), et dans lequel, pour la transmission de couple de rotation dans l'état accouplé, une partie saillante (205a, 205b) du suiveur (205) s'engage dans une contre-dépouille de l'un des éléments de transmission de force (105a, 105b).

9. Accouplement (300) selon la revendication 8, **caractérisé en ce que** les parties saillantes (205a, 205b) du suiveur (205) sont constituées par des contre-dépouilles en queue d'aronde du suiveur (205).

10. Accouplement (300) selon l'une des revendications précédentes, **caractérisé en ce que** les éléments de transmission de force (105a, 105b) et le suiveur (205) sont conçus de telle sorte qu'après l'assemblage des deux moitiés d'accouplement (100, 200) et avant l'aboutissement de l'engagement entre le suiveur (205) et l'un des éléments de transmission de force (105a, 105b), une rotation de la deuxième moitié d'accouplement (200) est possible par rapport à la première moitié d'accouplement (100).

11. Accouplement (300) selon l'une des revendications précédentes, **caractérisé en ce que** les deux éléments de transmission de force (105a, 105b) possèdent respectivement des répartitions de masse différentes de telle sorte que, lors de la rotation de la première moitié d'accouplement (100), les deux éléments de transmission de force (105a, 105b) adoptent une position définie par rapport à la première moitié d'accouplement (100) sous l'action des forces centrifuges agissant sur les deux éléments de transmission de force (105a, 105b).

12. Système de pompe avec un entraînement, une pompe et un accouplement (300) selon l'une des revendications précédentes, dans lequel l'entraînement est relié de manière solidaire en rotation au premier arbre (107) de la première moitié d'accouplement (100) et la pompe est reliée de manière solidaire en rotation au deuxième arbre (207) de la deuxième moitié d'accouplement (200) afin d'entraîner la pompe par l'intermédiaire de l'entraînement.

13. Système de pompe selon la revendication 12, **caractérisé en ce que** la pompe est conçue sous la forme d'une pompe doseuse.

14. Appareil ménager, en particulier machine à laver, avec un système de pompe selon la revendication 12 ou la revendication 13 avec un accouplement (300) selon l'une des revendications 1 à 11.

15. Procédé pour faire fonctionner un appareil ménager, en particulier une machine à laver qui comprend un système de pompe selon la revendication 12 ou la revendication 13 avec un accouplement (300) selon l'une des revendications 1 à 11, **caractérisé en ce que**, lors d'un blocage côté sortie de l'accouplement (300), une rotation en sens inverse de courte durée du côté entraînement de l'accouplement (300) est mise en oeuvre.
